# FASCICULE DE BREVET EUROPEEN

(11) **EP 4 301 657 B1**
(45) Date de publication et mention de la délivrance du brevet: **13.08.2025**
(21) Numéro de dépôt: 22710692.9
(22) Date de dépôt: 24.02.2022
(51) Int. Cl.: B64C 11/00, B29C 70/06, B29C 70/48, B64C 11/20, F01D 5/14, F03B 3/12, F01D 5/28, F01D 5/30, B29C 70/86, B29D 99/00, B64D 27/10, F01D 7/00, B29C 70/24

(54) **AUBE COMPRENANT UNE STRUCTURE EN MATÉRIAU COMPOSITE ET PROCÉDÉ DE FABRICATION ASSOCIÉ**
SCHAUFEL MIT EINER STRUKTUR AUS VERBUNDWERKSTOFF UND ZUGEHÖRIGES HERSTELLUNGSVERFAHREN
BLADE COMPRISING A COMPOSITE MATERIAL STRUCTURE AND METHOD OF MANUFACTURING THE SAME

(30) Priorité: 01.03.2021 FR 2101966
(43) Date de publication de la demande: 10.01.2024
(73) Titulaire: SAFRAN AIRCRAFT ENGINES, 75015 Paris (FR)
(72) Inventeur: JOUDON, Vincent, 77550 MOISSY-CRAMAYEL (FR)
(74) Mandataire: Regimbeau
(86) Numéro de dépôt international: PCT/FR2022/050339
(87) Numéro de publication internationale: WO 2022/184997

(56) Documents cités:
- EP-B1- 2 588 758
- WO-A1-2011/083250
- FR-A1- 2 252 916
- FR-A1- 3 076 814
- FR-A1- 3 080 322

## Description

### DOMAINE DE L'INVENTION

L'invention concerne une aube comprenant une structure en matériau composite.

L'invention concerne plus particulièrement, mais non exclusivement, une aube destinée à être utilisée dans un rotor de soufflante non-carénée de moteur d'aéronef (tels qu'un moteur de type « Open Rotor », c'est-à-dire dont la soufflante n'est pas carénée, présentant deux hélices tournantes ou un moteur de type USF pour « Unducted Single Fan » présentant un aubage mobile et un aubage fixe ou un turbopropulseur présentant une architecture avec une seule hélice) ou dans un rotor d'éolienne.

### ETAT DE LA TECHNIQUE

La conception des aubes de soufflante nécessite de prendre en compte des contraintes antagonistes.

D'un côté, le dimensionnement de ces aubes doit permettre des performances aérodynamiques optimales (maximiser le rendement et fournir la poussée tout en minimisant les pertes). L'amélioration des performances aérodynamiques de la soufflante tendant vers une augmentation du taux de dilution (BPR), cela se traduit par une augmentation du diamètre externe, et donc de l'envergure de ces aubes.

D'un autre côté, il est également nécessaire de garantir une résistance aux contraintes mécaniques pouvant s'exercer sur ces aubes tout en limitant leur signature acoustique.

L'intérêt des moteurs à soufflante non-carénée est que le diamètre de la soufflante n'est pas limité par la présence d'un carénage, de sorte qu'il est possible de concevoir un moteur présentant un fort taux de dilution, et par conséquent une consommation réduite de carburant.

Ainsi, dans ce type de moteur, les aubes de la soufflante peuvent présenter une grande envergure.

Il a été proposé de réaliser ces aubes en matériau métallique. Si les aubes en matériau métallique ont une bonne résistance mécanique, elles présentent toutefois l'inconvénient d'avoir une masse relativement importante.

Afin de réduire cette masse, il est souhaitable de pouvoir fabriquer ces aubes en matériau composite.

De plus, ces moteurs comprennent généralement un mécanisme permettant de modifier l'angle de calage des aubes afin d'adapter la poussée générée par la soufflante en fonction des différentes phases de vol.

Par ailleurs, sur les architectures à soufflante non-carénée, le démarrage du moteur est généralement effectué « en drapeau » avec un calage très ouvert. En effet, un calage très ouvert permet de consommer la puissance par le couple, ce qui assure la sécurité machine en garantissant des régimes de soufflante faibles.

Or, avec un calage très ouvert, les aubes subissent un écoulement aérodynamique turbulent, complètement décollé, qui génère une excitation vibratoire large bande. En particulier sur des aubes à large corde et de grande envergure, l'effort de flexion est intense, bien que le régime moteur ne soit pas maximal.

Pour éviter ce phénomène de rotulage au démarrage ou en situation de « windmilling », il a notamment été proposé dans le document FR3080322 de réaliser une aube en matériau composite comprenant une partie de pied d'aube insérée dans une pièce d'attache de pied d'aube. La partie de pied d'aube comprend deux portions obtenues en réalisant une déliaison dans le renfort fibreux et une pièce de blocage en forme de coin positionnée de sorte à maintenir écartées les deux portions l'une de l'autre pour s'opposer à un retrait de la partie de pied d'aube de la pièce d'attache.

Toutefois, les efforts aérodynamiques intenses auxquelles ces aubes sont soumises risquent d'endommager l'aube au niveau de l'échasse reliant le pied à la pale et/ou le moyeu dans la zone d'interface entre ces aubes et le moyeu du rotor de la soufflante. Une excitation vibratoire intense peut en effet survenir également à des régimes de rotation beaucoup plus élevées sur les architectures non carénées à cause des effets d'installation du moteur sur l'avion et de la direction de l'écoulement infini amont. En effet, un moteur non caréné subit l'influence du sol et du fuselage ce qui provoque une distorsion dans l'alimentation de l'hélice, en vitesse d'écoulement, selon les azimuts moteur. Cela entraîne une réponse vibratoire des aubes notamment sur les premiers ordres moteurs 1N, 2N et 3N. D'autre part, en l'absence de manche d'entrée d'air, la direction de l'air qui s'écoule à travers les pales n'est pas parallèle à l'axe moteur. Cet angle de dérapage entraine des efforts dits « 1P » qui provoquent une réponse vibratoire des aubes sur l'ordre moteur 1N. De façon similaire, ces efforts 1P peuvent également apparaître lors des phases de montées ou d'approche de l'aéronef car l'air s'écoule à travers les pales avec un angle d'incidence.

Les documents FR 3 076 814, FR 2 252 916, WO 2011/083250, EP 2 588 758 décrivent des aubes en matériau composite comprenant des peaux et un longeron. Le document FR 3 080 322 décrit une aube en matériau composite comprenant une attache de pied.

### EXPOSE DE L'INVENTION

Un but de l'invention est de proposer une aube comprenant un matériau composite adaptée pour être utilisée avec un mécanisme de calage variable et dans un environnement du type « Open Rotor » qui limite voire supprime les risques de rotulage de l'aube lors de toutes les phases de vol qui sont susceptibles d'exciter les modes vibratoires de l'aube, même dans le cas d'une aube ayant une large corde et une grande envergure.

Un autre but de l'invention est de proposer une aube comprenant un matériau composite adaptée pour être utilisée avec un mécanisme de calage variable et dans un environnement du type « Open Rotor » tout en étant capable de résister à des efforts aérodynamiques intenses, sous la contrainte d'un encombrement limité et d'une masse minimale.

Un autre but encore de l'invention est de proposer une aube comprenant un matériau composite adaptée pour être utilisée avec un mécanisme de calage variable et dans un environnement du type « Open Rotor » dont le rapport de moyeu est réduit en comparaison avec les aubes en matériau composite de l'art antérieur tout en étant capable de résister à des efforts aérodynamiques intenses.

Un autre but est de proposer une aube comprenant un matériau composite adaptée pour être utilisée avec un mécanisme de calage variable et dans un environnement du type « Open Rotor » qui puisse être réalisée de manière simple et rapide, sans nécessiter un grand nombre d'opérations.

Il est à cet effet proposé, selon un premier aspect de l'invention une aube comprenant une structure en matériau composite comprenant :
- une structure à profil aérodynamique comprenant deux peaux en vis-à-vis, les peaux comprenant un premier renfort fibreux densifié par une matrice ; et
- un longeron comprenant un deuxième renfort fibreux obtenu par tissage tridimensionnel et densifié par la matrice, ledit longeron comprenant une partie de pied d'aube s'étendant à l'extérieur de la structure à profil aérodynamique et une partie de pale disposée à l'intérieur de la structure à profil aérodynamique entre les deux peaux.

De plus, au sein de la partie de pied d'aube, le deuxième renfort fibreux comprend une zone non déliée et au moins deux zones déliées s'étendant radialement depuis la zone non déliée de sorte à former au moins quatre branches distinctes.

On notera que la matrice peut être injectée dans le premier et le deuxième renfort fibreux au cours d'une même étape ou lors de deux étapes successives.

Certaines caractéristiques préférées mais non limitatives de l'aube selon le premier aspect sont les suivantes, prises individuellement ou en combinaison dans la mesure où elles entrent dans le cadre des revendications annexées :
- au sein de la partie de pied d'aube, les branches de la zone déliée sont globalement inscrites dans un cercle centré sur un axe de calage de l'aube ;
- au sein de la partie de pied d'aube, une extrémité libre des branches est sensiblement arrondie de sorte à suivre une courbure du cercle ou droite ;
- l'aube comprend en outre une pièce d'attache comprenant une paroi délimitant une cavité configurée pour recevoir au moins partiellement la partie de pied d'aube, la pièce d'attache pouvant être métallique et la paroi de la pièce d'attache comprenant au moins quatre renfoncements configurés pour recevoir chacun, avec ajustement, une branche du deuxième renfort fibreux ;

- dans une portion de la partie de pied d'aube qui fait saillie de la pièce d'attache, un diamètre du cercle diminue en direction de la partie de pale ;
- au sein de la partie de pied d'aube, la zone non déliée présente une première dimension, suivant un axe sensiblement parallèle à une corde de l'aube, qui est constante sur une hauteur de la partie de pied d'aube ;
- au sein de la partie de pied d'aube, la zone non déliée présente une deuxième dimension, suivant un axe tangentiel qui est sensiblement perpendiculaire à une corde de l'aube, qui est constante sur une hauteur de la partie de pied d'aube ;
- la partie de pale présente une portion inférieure adjacente à la partie de pied d'aube, la zone déliée et la zone non déliée du deuxième renfort fibreux s'étendant jusque dans la portion inférieure, l'aube comprenant en outre au moins deux pièces de remplissage réalisées dans un matériau comportant des cavités internes, chaque pièce de remplissage étant montée au sein d'une zone déliée correspondante ;
- la zone non déliée présente une première dimension, suivant un axe sensiblement parallèle à une corde de l'aube, qui est plus grande dans la portion inférieure de la partie de pale que dans la partie de pied d'aube ;
- la première dimension augmente progressivement au sein de la portion inférieure de la partie de pale en direction d'un sommet de l'aube.
- au sein de la portion inférieure de la partie de pale, la zone non déliée présente une deuxième dimension, suivant un axe tangentiel qui est sensiblement perpendiculaire à une corde de l'aube, qui diminue en direction d'un sommet de l'aube ;
- la portion inférieure de la partie de pale comprend en outre au moins deux pièces de remplissage additionnelles réalisées dans un matériau comportant des cavités internes, chaque pièce de remplissage additionnelle étant montée entre la zone non déliée et une peau correspondante ;
- les zones non déliées au sein de la partie de pale s'étendent jusqu'à une partie des peaux qui définit un bord d'attaque et/ou un bord de fuite de l'aube ;
- la partie de pale présente en outre une portion supérieure comprenant le sommet d'aube, la portion supérieure de la partie de pale comprenant en outre au moins une pièce de remplissage supplémentaire réalisée dans un matériau comportant des cavités internes, la portion supérieure de la partie de pale étant dépourvue de deuxième renfort fibreux ; et/ou
- la partie de pale présente en outre une portion supérieure comprenant le sommet d'aube, la portion supérieure de la partie de pale comprenant uniquement le deuxième renfort fibreux.

Selon un deuxième aspect, l'invention propose un procédé de fabrication d'une aube selon le premier aspect comprenant les étapes suivantes :
S1 : tissage tridimensionnel du deuxième renfort fibreux du longeron comprenant au moins deux zones déliées et la zone non déliée ;
S2 : réalisation du premier renfort fibreux de la structure à profil aérodynamique, par exemple par tissage tridimensionnel ;
S4 : insertion du deuxième renfort fibreux dans le premier renfort fibreux de sorte que la partie de pied d'aube se trouve à l'extérieur du premier renfort fibreux et que la partie de pale se trouve à l'intérieur du premier renfort fibreux ; et
S5 : placement l'ensemble formé par le premier renfort fibreux et le deuxième renfort fibreux dans un moule et injection d'une matrice dans l'ensemble de sorte à obtenir l'aube.

Certaines caractéristiques préférées mais non limitatives du procédé de fabrication selon le deuxième aspect sont les suivantes, prises individuellement ou en combinaison dans la mesure où elles entrent dans le cadre des revendications annexées :
- le procédé comprend en outre, préalablement à l'étape S4, une étape de positionnement d'au moins une pièce de remplissage réalisée dans un matériau comportant des cavités internes par rapport au premier renfort fibreux ; et/ou
- le procédé comprend en outre suite à l'étape S6 une étape de fixation d'une pièce d'attache sur la partie de pied d'aube.

Selon un troisième aspect, l'invention propose un moteur à turbine à gaz pour aéronef comprenant une soufflante, la soufflante comprenant un moyeu et des aubes s'étendant radialement à partir du moyeu, les aubes étant conformes au premier aspect, chaque aube étant montée rotative par rapport au moyeu autour d'un axe de calage respectif, le moteur comprenant en outre un mécanisme d'actionnement propre à être commandé pour faire tourner les aubes autour de leurs axes de calage de manière à modifier l'angle de calage des aubes.

Selon un quatrième aspect non-revendiqué, l'invention propose un aéronef comprenant un moteur à turbine à gaz selon le deuxième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente de manière schématique un exemple de moteur incluant une soufflante non-carénée.
La figure 2 représente de manière schématique une aube de soufflante et un mécanisme d'actionnement permettant de modifier l'angle de calage des aubes de la soufflante.
La figure 3 est une vue de côté d'un exemple de réalisation d'une aube conforme à un mode de réalisation de l'invention ;
La figure 4a est une vue en coupe suivant la section A-A de la figure 3 selon un premier mode de réalisation ;
La figure 4b est une vue en coupe suivant la section B-B de la figure 3 selon le premier mode de réalisation ;
La figure 4c est une vue en coupe suivant la section C-C de la figure 3 selon le premier mode de réalisation ;
La figure 4d est une vue en coupe suivant la section D-D de la figure 3 selon le premier mode de réalisation ;
La figure 4e est une vue en coupe suivant la section E-E de la figure 3 selon le premier mode de réalisation ;
La figure 4f est une vue en coupe suivant la section G-G de la figure 3 selon le premier mode de réalisation ;
La figure 5a est une vue en coupe suivant la section C-C de la figure 3 selon un deuxième mode de réalisation ;
La figure 5b est une vue en coupe suivant la section D-D de la figure 3 selon le deuxième mode de réalisation ;
La figure 5c est une vue en coupe suivant la section E-E de la figure 3 selon le deuxième mode de réalisation ;
La figure 5d est une vue en coupe suivant la section F-F de la figure 3 selon le deuxième mode de réalisation ;
La figure 6a est une vue schématique illustrant la réalisation de deux déliaisons dans une préforme fibreuse, de part et d'autre d'une zone non déliée selon un mode de réalisation de l'invention ;
La figure 6b est une vue schématique d'une section de la partie de pied d'aube de la figure 3 entre les sections A-A et B-B ;
La figure 7 est un organigramme d'étapes d'un procédé de fabrication d'une aube selon un mode de réalisation de l'invention ;
La figure 8a illustre un exemple de préforme fibreuse destinée à former un renfort fibreux d'un longeron d'une aube conforme à un mode de réalisation avant détourage et mise en forme, sur laquelle le détourage de la préforme est indiquée en traits discontinus ; et
La figure 8b illustre l'assemblage de la préforme fibreuse de la figure 8a avec un exemple de préforme fibreuse destinée à former un renfort fibreux d'une structure aérodynamique dans laquelle ont été préalablement insérés des pièces de remplissage.
La figure 9 illustre un exemple d'aéronef comprenant des moteurs conformes à un mode de réalisation de l'invention.

Sur l'ensemble des figures, les éléments similaires portent des références identiques.

### DESCRIPTION DETAILLEE DE L'INVENTION

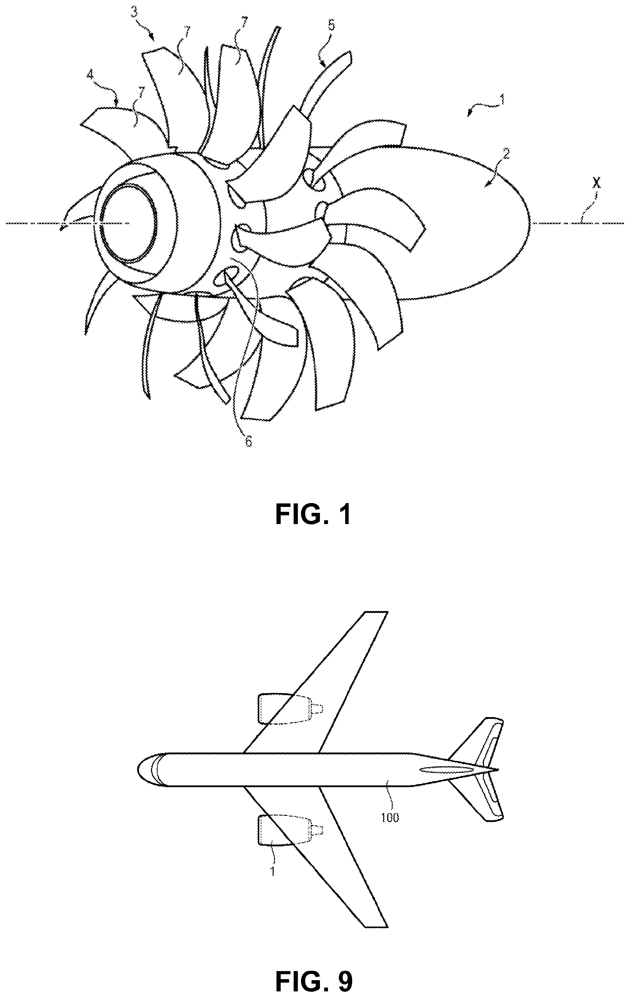

Sur la figure 1, le moteur 1 représenté est un moteur de type « Open Rotor », en configuration couramment qualifiée de « pusher » (i.e. la soufflante non-carénée est placée à l'arrière du générateur de puissance avec une entrée d'air située sur le côté, à droite sur la figure 1).

Le moteur comprend une nacelle 2 destinée à être fixée à un fuselage d'un aéronef, et une soufflante 3 (ou hélice) non-carénée. La soufflante 3 comprend deux rotors de soufflante contrarotatifs 4 et 5. Autrement dit, lorsque le moteur 1 est en fonctionnement, les rotors 4 et 5 sont entrainés en rotation par rapport à la nacelle 2 autour d'un même axe de rotation X (qui coïncide avec un axe principal du moteur), en sens opposés.

Dans l'exemple illustré sur la figure 1, le moteur 1 est un moteur de type « Open Rotor » en configuration « pusher » à rotors de soufflante contrarotatifs. Cependant, l'invention n'est pas limitée à cette configuration. L'invention s'applique également à des moteurs de type « Open Rotor » en configuration « puller » (i.e. la soufflante est placée en amont du générateur de puissance avec une entrée d'air située avant, entre ou juste derrière les deux rotors de soufflante).

En outre, l'invention s'applique également à des moteurs présentant des architectures différentes, telles qu'une architecture comprenant un rotor de soufflante comprenant des aubes mobiles et un stator de soufflante comprenant des aubes fixes, ou bien un unique rotor de soufflante.

L'invention est applicable à des architectures de type turbopropulseur (comprenant un unique rotor de soufflante), ainsi qu'à des rotors d'éolienne.

Dans la présente demande, on appelle axe X, l'axe de rotation du rotor de soufflante (ou de l'hélice). La direction axiale correspond à la direction de l'axe X et une direction radiale est une direction perpendiculaire à cet axe X et passant par lui. Par ailleurs, la direction circonférentielle (ou tangentielle) correspond à une direction perpendiculaire à l'axe X et ne passant pas par lui.

L'aube sera ainsi définie par rapport à l'axe X du rotor sur lequel elle est destinée à être montée. Enfin, on comprendra ici, pour une section donnée de l'aube (et donc pour un point donné de l'axe d'empilement Z), le segment de droite sensiblement axial qui connecte le bord d'attaque au bord de fuite de l'aube.

Sur la figure 1, chaque rotor de soufflante 4, 5 comprend un moyeu 6 (ou moyeu d'aubage) monté rotatif par rapport à la nacelle 2 et une pluralité d'aubes 7 fixées au moyeu 6. Les aubes 7 s'étendent sensiblement radialement par rapport à l'axe de rotation X du rotor.

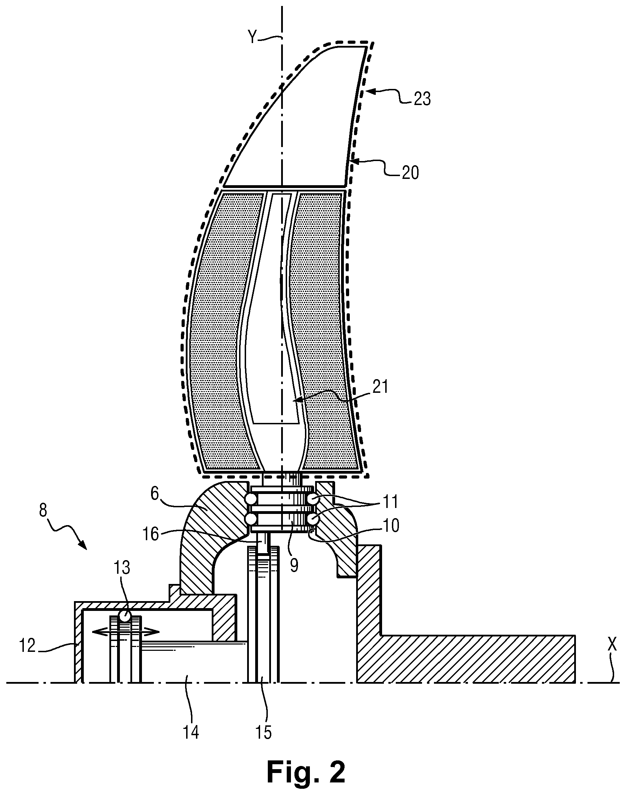

Comme illustré sur la figure 2, la soufflante 3 comprend en outre un mécanisme d'actionnement 8 permettant de modifier collectivement l'angle de calage des aubes 7 des rotors, afin d'adapter les performances du moteur aux différentes phases de vol. A cet effet, chaque aube 7 comprend une pièce d'attache 9 (ou moyeu d'aube) disposée en pied d'aube 7. La pièce d'attache 9 est montée rotative par rapport au moyeu 6 autour d'un axe de calage Y. Plus précisément, la pièce d'attache 9 est montée rotative à l'intérieur d'un logement 10 ménagé dans le moyeu 6, par l'intermédiaires de billes 11 ou d'autres éléments roulants.

La pièce d'attache 9 comprend une paroi présentant une surface externe ayant une forme de révolution. La surface externe présente deux gorges circulaires propres à former des chemins de roulement pour des billes ou d'autres éléments roulants.

Le mécanisme d'actionnement 8 comprend par exemple un actionneur 12 comprenant un corps 13 fixé au moyeu 6 et une tige 14 propre à être entrainée en translation par rapport au corps 12. Le mécanisme d'actionnement 8 comprend en outre une glissière annulaire 15 montée solidaire de la tige 14 et un pion 16 monté solidaire de la pièce d'attache 9. Le pion 16 est propre à coulisser dans la glissière 15 et à tourner par rapport à la glissière 15, de manière à convertir un mouvement de translation de la tige 14 est un mouvement de rotation de la pièce d'attache 9, et par conséquent un mouvement de rotation de l'aube 7 par rapport au moyeu 6 autour de son axe de calage Y.

L'aube 7 comprend une structure à profil aérodynamique 20 propre à être placée dans un flux d'air lorsque le moteur 1 est en fonctionnement afin de générer une portance, ainsi qu'un longeron 21.

La structure à profil aérodynamique 20 comprend deux peaux 22, qui sont raccordées l'une à l'autre et s'étendent globalement l'une en face de l'autre. Les peaux 22 sont conformées de sorte à définir ensemble un intrados I, un extrados E, un bord d'attaque 18 et un bord de fuite 19. De manière connue en soi, le bord d'attaque 18 est configuré pour s'étendre en regard de l'écoulement des gaz entrant dans le moteur 1. Il correspond à la partie antérieure d'un profil aérodynamique qui fait face au flux d'air et qui divise l'écoulement d'air en un écoulement d'intrados et en un écoulement extrados. Le bord de fuite 19 quant à lui correspond à la partie postérieure du profil aérodynamique, où se rejoignent les écoulements intrados et extrados.

Les peaux 22 de la structure à profil aérodynamique 20 sont réalisées dans un matériau composite comprenant un renfort fibreux (ci-après, renfort de peau 23) densifié par une matrice. Elles sont donc monolithiques et sont réalisées d'une seule pièce selon un mode de réalisation non limitatif. En variante non représentée, il est possible de considérer un renfort fibreux pour l'intrados et un autre pour l'extrados.

Le longeron 21 comprend une partie de pied d'aube 24 qui s'étend à l'extérieur de la structure à profil aérodynamique 20 et une partie de pale 25 qui est disposée à l'intérieur de la structure à profil aérodynamique 20, entre les deux peaux 22. Il comprend également un renfort fibreux (ci-après, renfort de longeron 26) qui est obtenu par tissage tridimensionnel et est densifié par une matrice : la partie de pied d'aube 24 et la partie de pale 25 sont donc monolithiques et réalisées d'une seule pièce.

Les renforts de peau 23 et de longeron 26 peuvent chacun être formés à partir de préformes fibreuses en une seule pièce avec épaisseur évolutive. Chaque matrice comprend typiquement une matière organique (thermodurcissable, thermoplastique ou élastomère) ou une matrice en carbone. Par exemple, chaque matrice comprend une matière plastique, typiquement un polymère, par exemple époxyde, bismaléimide ou polyimide. Les fibres du renfort fibreux comprennent au moins l'un des matériaux suivants : carbone, verre, aramide, polypropylène et/ou céramique. La matrice et les fibres des matériaux composites formant le renfort de peau 23 et le renfort de longeron 26 peuvent être identiques ou différents. De préférence, ils sont identiques.

Le renfort de longeron 26 comprend des arrangements fibreux tissés tridimensionnels. Il est par ailleurs tissé de telle sorte qu'il comprend des fils de chaine qui s'étendent continument à la fois à l'intérieur de la partie de pale 25 à profil aérodynamique et à l'intérieur de la partie de pied d'aube 24.

Le renfort de peau 23 peut comprendre des arrangements fibreux tissés (bidimensionnels ou tridimensionnels), tressés, tricotés ou stratifiés.

Afin de limiter, voire supprimer, les risques de rotulage de l'aube 7 lors de toutes les phases de vol qui sont susceptibles d'exciter les modes vibratoires de l'aube 7, même dans le cas d'une aube 7 ayant une large corde et une grande envergure, le renfort de longeron 26 au sein de la partie de pied d'aube 24 comprend une zone non déliée 27 et au moins deux zones déliées 28 qui s'étendent radialement depuis la zone non déliée 27 de sorte à former au moins quatre branches 29 distinctes (chaque zone déliée 28 du renfort fibreux réalisant deux branches 29). Lorsque le renfort de longeron 26 comprend exactement deux zones déliées 28, la partie de pied d'aube 24 présente donc, dans un plan normal à l'axe de calage Y (qui est globalement tangentiel par rapport à l'axe X), une section en forme de croix, le cœur de la croix étant formé par la zone non déliée 27. Toutefois, il peut être noté que ceci n'est pas limitatif, le renfort de longeron 26 pouvant comprendre un nombre de zones déliées 28 (dans le plan du renfort de longeron 26 (selon l'axe de calage Y) ou dans l'épaisseur du renfort de longeron 26) plus important définissant un plus grand nombre de branches 29.

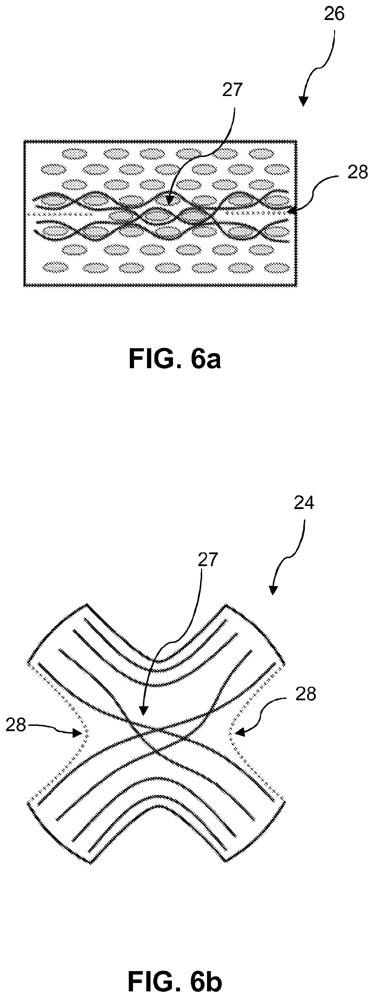

Par zone déliée 28, on comprendra ici que, lors du tissage du renfort de longeron 26, une déliaison est réalisée à l'intérieur de l'ébauche fibreuse entre deux couches successives de chaîne depuis la zone non déliée 27 (qui est dépourvue de déliaison, ou du moins de déliaison débouchante) jusqu'à l'extrémité 30 des branches 29 de sorte à former la zone déliée 28 du renfort de longeron 26. En particulier, comme illustré sur les figures 6a et 6b, les torons de chaîne des deux couches successives ne sont pas reliés par des torons de trame au niveau de la zone déliée 28, formant ainsi la zone non déliée 27 (centrale) et les quatre branches 29 « déliées » que l'on peut ouvrir pour former la croix. Chaque zone déliée 28 permet ainsi de séparer le renfort fibreux en deux portions destinées à former chacune une branche 29. On pourra se référer à titre d'exemple au document EP2588758 au nom de la Demanderesse pour plus de détails sur la réalisation de déliaisons.

Cette configuration à au moins quatre branches 29 de la partie de pied d'aube 24 assure une reprise des actions mécaniques issues des efforts aérodynamiques et centrifuges s'appliquant sur l'aube 7 complète tout en permettant un calage variable de l'aube 7.

De préférence, la zone non déliée 27 est globalement centrée au milieu de la corde de l'aube, en tout point de la hauteur de l'aube 7. Cependant, il peut également être intéressant de centrer cette zone non déliée 27 sur l'axe de calage Y ou selon une autre séquence d'empilage.

Dans une forme de réalisation, la paroi de la pièce d'attache 9 délimite une cavité configurée pour loger la partie de pied d'aube 24 du longeron 21. La paroi est de forme complémentaire de la partie de pied d'aube 24 qu'elle reçoit afin de la recevoir avec ajustement et serrage. Dans la configuration illustrée où la partie de pied d'aube 24 est en forme de croix, la cavité présente donc quatre renfoncements dont les dimensions (dans un plan radial à l'axe de calage Y et selon l'axe de calage Y) sont sensiblement égales à celles des branches 29 de la partie de pied d'aube 24.

La pièce d'attache 9 est formée en métal, par exemple en acier martensitique.

Dans une forme de réalisation, au sein de la partie de pied d'aube 24, les branches 29 définies par les zones déliées 28 sont globalement inscrites dans un cercle C centré sur l'axe de calage Y de l'aube 7. Par inscrite dans un cercle C, on comprendra ici que l'extrémité libre 30 des branches 29 coupe le cercle C en au moins un point. La zone non déliée 27 est de préférence centrée par rapport au cercle C de sorte que la longueur des branches 29 (suivant une direction radiale passant par le centre du cercle C) est sensiblement égale.

Optionnellement, l'extrémité libre 30 des branches 29 est sensiblement courbe et peut suivre la courbure du cercle C. L'extrémité libre 30 des branches 29 coupe donc le cercle C selon une ligne. En variante, l'extrémité libre 30 des branches 29 peut être droite ou présenter toute autre forme adaptée.

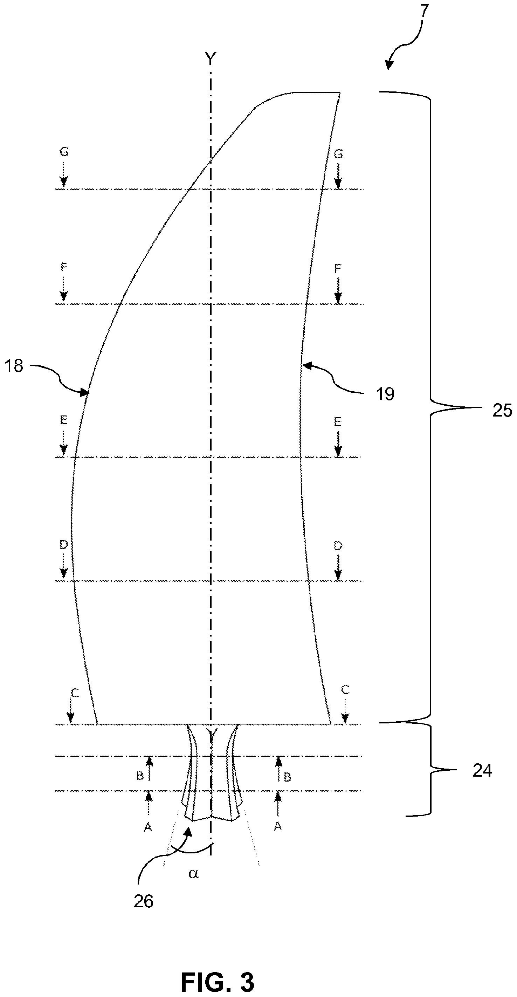

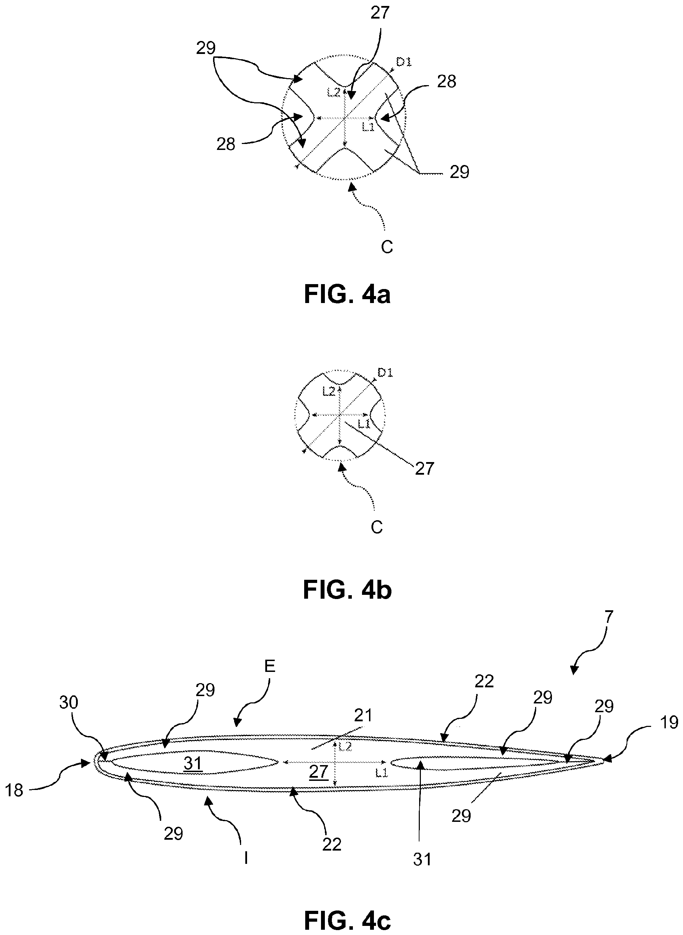

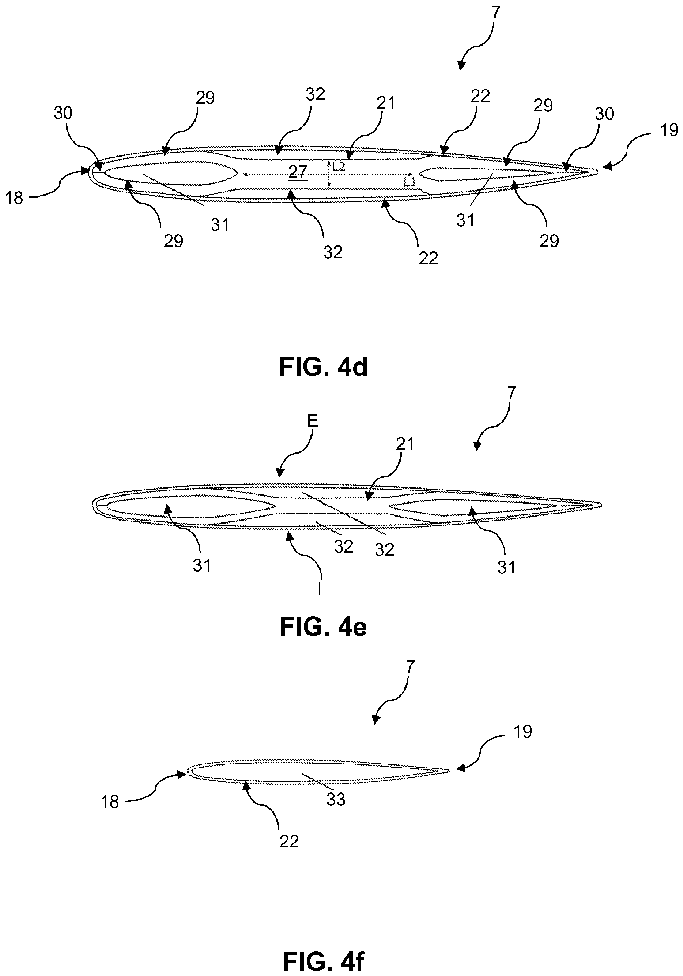

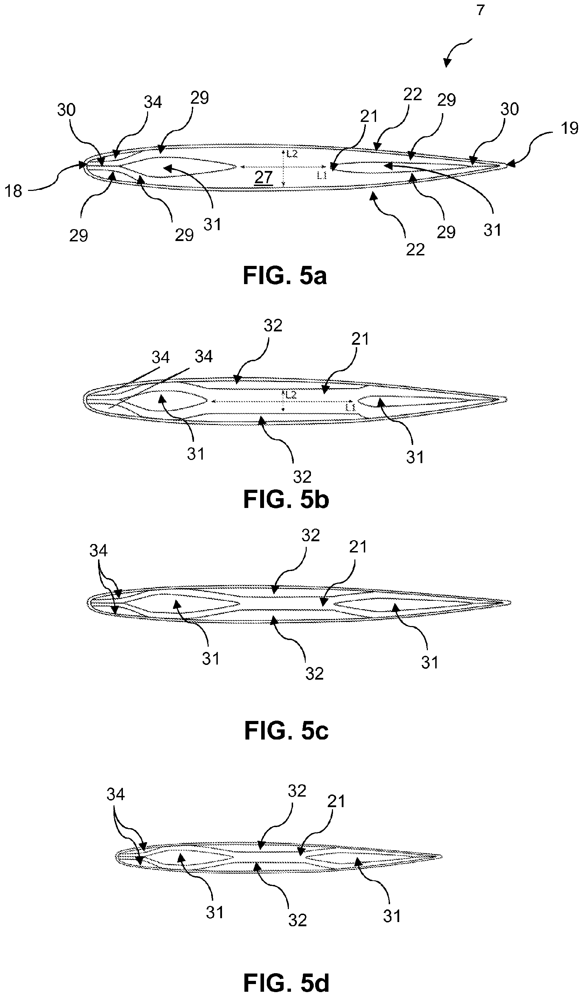

Un exemple d'aube 7 conforme à un mode de réalisation de l'invention a été illustré en figure 3. Ici, le renfort de longeron 26 comprend deux zones déliées 28 : ceci n'est cependant pas limitatif, comme indiqué ci-avant. Des sections A-A, B-B, ..., G-G, prises chacune dans un plan normal à l'axe de calage Y de l'aube 7 ont été illustrées sur les figures 4a à 4f, qui correspondent à un premier mode de réalisation, et sur les figures 5a à 5d, qui correspondent à un deuxième mode de réalisation. Les sections A-A, B-B, etc. sont chacune réalisées à une hauteur différente de l'aube 7.

La section A-A coupe une partie inférieure de la partie de pied d'aube 24 qui est configurée pour être logée dans la pièce d'attache 9. Dans la partie de pied d'aube 24, le renfort de longeron 26 comprend la zone non déliée 27 et les deux zones déliées 28 formant ensemble une croix comprenant quatre branches 29. L'extrémité libre 30 des branches 29 est arrondie de sorte que la croix est inscrite dans le cercle C au sens strict.

La section B-B coupe la partie de pied d'aube 24 au niveau de la sortie de la pièce d'attache 9, c'est-à-dire au niveau de l'ouverture de la pièce d'attache 9 par laquelle la partie de pied d'aube 24 fait saille de la pièce d'attache 9. Cette section B-B marque ainsi la fin de l'encastrement de la partie de pied d'aube 24.

Dans une forme de réalisation, le diamètre du cercle C dans la section B-B est inférieur au diamètre du cercle C dans la section A-A. En d'autres termes, l'aire de la section de la partie de pied d'aube 24 qui coupe la section B-B est inférieure à celle qui coupe la section A-A. Ceci permet en effet d'assurer la rétention de la partie de pied d'aube 24 par restriction de section à l'intérieur de la pièce d'attache 9. De préférence, le diamètre du cercle C diminue progressivement, optionnellement de manière linéaire, au sein de la partie de pied d'aube 24 en direction de la partie de pale 25, c'est-à-dire de la section A-A en direction de la section B-B.

La longueur L1 de la zone non déliée 27 suivant la direction corde et l'épaisseur L2 de la zone non déliée 27 suivant une direction perpendiculaire à la direction corde (la longueur longueurs L1 et l'épaisseur L2 étant toutes deux mesurées dans un plan normal à l'axe de calage Y) sont de préférence constantes entre les sections A-A et B-B. En d'autres termes, la longueur des branches 29 diminue entre les sections A-A et B-B alors que la zone non déliée 27 reste inchangée. De la sorte, la zone non déliée 27 est capable de reprendre les efforts centrifuges et les moments de flexion issus des efforts aérodynamiques sur les surfaces situées au niveau des extrémités libres 30 des branches 29, inclinées selon un angle α par rapport à l'axe de calage Y (où l'angle α correspond à l'angle formé entre l'axe de calage et la surface radiale de la partie de pied d'aube 24 au niveau de l'extrémité 30 d'une branche 29 - voir figure 3). Le matériau composite travaille ainsi dans la direction trame et non selon la direction hors-plan, qui est moins raide. En complément, les surfaces extérieures de la partie de pied d'aube 24 qui forment les creux entre deux branches 29 adjacentes assurent la reprise de la torsion issue des efforts aérodynamiques s'appliquant sur l'aube 7. Au niveau de la section B-B, les efforts centrifuges et les moments de flexion induisent des contraintes de traction/compression dans les torons de chaîne alors que la torsion induit du cisaillement.

Dans une variante de réalisation, la diminution de l'aire de la section de la partie de pied d'aube 24 entre la section B-B et la section A-A peut être réalisée en jouant sur la longueur L1 et/ou l'épaisseur L2 et/ou sur l'épaisseur des branches 29, qui peut être évolutive. Dans ce cas, les efforts centrifuges ne sont plus repris uniquement sur les surfaces des extrémités 30 des branches 29 par compression des torons de trame mais également sur les autres surfaces par compression hors plan des branches 29 et/ou de la zone non déliée 27.

Quelle que soit la variante de réalisation, la configuration à branches 29 (de sorte à former une croix ou, le cas échéant, une étoile à au moins six branches 29) de la partie de pied d'aube 24 en sortie d'encastrement permet d'augmenter considérablement la valeur du moment quadratique par rapport à une section rectangulaire inscrite à l'intérieur d'un cercle C de même diamètre. Cela permet en effet de diminuer considérablement les contraintes dans la zone échasse c'est-à-dire la zone de la partie de pied d'aube 24 située entre la sortie de la pièce d'attache et la partie de pale 25), en particulier dans le cas d'une flexion globalement autour de la direction corde.

La section C-C se situe à l'interface entre la partie de pied d'aube 24 et la partie de pale 25. L'échasse de l'aube 7 s'étend donc de la section B-B à la section C-C et permet de faire la transition entre la partie de pied d'aube 24 et la partie de pale 25.

Afin de limiter le rapport de moyeu, la hauteur de l'échasse est faible. Pour cela, l'épaisseur de l'échasse est diminuée rapidement en refermant l'angle des branches 29 adjacentes au niveau des zones déliées 28, de la section B-B vers la section C-C. Optionnellement, l'épaisseur L2 de la zone non déliée 27 du renfort de longeron 26 peut également diminuer. En revanche, la longueur L1 de la zone non déliée 27 augmente pour conserver une section suffisante au niveau de la section C-C.

Avantageusement, un rapport de moyeu faible induit une compacité moteur et un gain de masse de la soufflante. En particulier, plus le moyeu en limite intérieure de veine est de diamètre réduit, plus il y a d'espace aérodynamique de travail disponible pour un diamètre extérieur donné d'aubage rotorique. Par conséquent, la transition d'épaisseur de l'aube 7 doit être très rapide dans la zone de l'échasse. Cela permet d'alimenter correctement le compresseur basse pression (ou booster) avec une manche d'entrée d'air annulaire et d'éviter l'utilisation d'une manche sectorielle déportée.

Cette forme de réalisation est plus simple et permet d'atteindre des gradients d'épaisseur bien plus importants que dans les procédés conventionnels, où la variation de l'épaisseur est obtenue par ajout ou suppression de couches de chaines qui doivent être tissées sur toute la longueur du renfort fibreux et coupées dans la zone de l'échasse car inutilisées dans cette zone et est souvent limitée par les contraintes du procédé de tissage.

La partie de pale 25 comprend une portion inférieure adjacente à la partie de pied d'aube 24 dont la limite radiale inférieure est définie par la section C-C. La zone déliée 28 et la zone non déliée 27 du renfort de longeron 26 s'étendent jusque dans la partie de pale 25.

Par ailleurs, l'aube 7 comprend en outre au moins deux pièces de remplissage 31 réalisées dans un matériau comportant des cavités internes, chaque pièce de remplissage 31 étant montée au sein d'une zone déliée 28 correspondante. Les pièces de remplissage 31 présentent de préférence une faible densité, par exemple de l'ordre d'une centaine de kg/m³, et une raideur de l'ordre d'une centaine de MPa. Les pièces de remplissage 31 peuvent notamment comprendre une mousse, telle qu'une mousse d'origine organique (polyethacrylimide, polytéréphtalate d'éthylène (PET), polychlorure de vinyle (PVC), polyétherimide (PEI), polyvinyl, carbone, polyisocyanurate, polyuréthane, etc.) ou métallique (notamment en alliage d'aluminium), ou encore un nid d'abeilles du type Nomex^{®} (comprenant des fibres aramides calandrées en feuilles et recouvertes de résine phénolique), en kevlar, en fibres de verre ou encore en aluminium.

De préférence, les pièces de remplissage 31 ne débouchent pas complètement sur la surface inférieure de la partie de pale 25 du renfort de longeron 26 (c'est-à-dire la surface libre de la partie de pale 25 qui est adjacente à l'échasse) afin de ménager un petit espace comblé par la résine au moment de l'injection et d'assurer ainsi l'étanchéité des cavités logeant les pièces de remplissage 31.

Dans une forme de réalisation, les extrémités libres 30 des branches 29 se rejoignent deux à deux respectivement à proximité du bord d'attaque 18 et du bord de fuite 19, emprisonnant ainsi les pièces de remplissage 31. Optionnellement, les parties déliées du renfort de longeron 26 s'étendent respectivement jusqu'au bord d'attaque 18 et au bord de fuite 19 de l'aube 7.

De préférence, la surface extérieure du renfort de longeron 26 est directement en contact avec la peau 22 en regard de la partie de pale 25. Dans la mesure où les peaux 22 sont placées en surface de l'aube 7 pour la protéger des impacts et de l'érosion, les peaux 22 de la structure à profil aérodynamique 20 sont de préférence directement en contact le long d'une grande surface avec le renfort de longeron 26 qui forme l'ossature structurale de l'aube 7. Le renfort de peau 23 et le renfort de longeron 26 sont ensuite reliés par cohésion de la résine au niveau de leur interface, ladite cohésion étant encore améliorée lorsqu'une même matrice est utilisée pour la densification du renfort de longeron 26 et du renfort de peau 23. Dans une première forme de réalisation illustrée sur les figures 4c à 4e, la surface des branches 29 formées par les zones déliées 28 est en contact continu avec le renfort de peau 23. En variante, dans une deuxième forme de réalisation illustrée sur les figures 5a à 5d, seules les branches 29 situées à proximité du bord de fuite 19 sont en contact continu avec le renfort de peau 23, les branches 29 situées à proximité du bord d'attaque 18 étant en contact discontinu avec le renfort de peau 23. Plus précisément, les branches 29 situées à proximité du bord d'attaque 18 peuvent être en contact avec le renfort de peau 23 au droit du bord d'attaque 18 ainsi que dans la zone adjacente à la zone non déliée 27 mais pas entre ces deux zones de sorte que des cavités sont ménagées entre les branches 29 et le renfort de peau 23, côté bord d'attaque 18. Une pièce de remplissage 34 peut alors être logée dans chaque cavité (voir par exemple figures 5a-5d), de part et d'autre des extrémités libres 30 côté bord d'attaque 18.

En variante, les cavités sont ménagées côté bord de fuite 19, les branches 29 situées à proximité du bord d'attaque 18 étant en contact continu ou, selon une autre variante encore, des cavités sont ménagées à la fois côté bord de fuite 19 et bord d'attaque 18, ces cavités étant alors comblées par des pièces de remplissage 34.

Le cas échéant, il est possible que l'extrémité libre 30 des branches 29 ne soient pas en contact avec la peau 22 au droit du bord d'attaque 18 et/ou du bord de fuite 19, une pièce de remplissage étant alors également insérées entre le bord d'attaque 18 et/ou le bord de fuite 19 et l'extrémité libre 30 des branches 29.

La section D-D se situe à une hauteur comprise entre 5 % et 30 % de la hauteur de la structure à profil aérodynamique 20 (ladite hauteur étant mesurée par projection sur l'axe de calage Y et s'étendant de l'interface entre la partie de pied d'aube 24 et la partie de pale 25 jusqu'au sommet de l'aube 7).

En remontant vers le sommet d'aube 7, la structure interne de l'aube 7 doit perdre en raideur pour suivre le profil aérodynamique qui s'affine mais également pour conserver une hiérarchie des contraintes acceptable en cas d'impact. Cela implique une diminution de l'épaisseur des branches 29 mais également une diminution de l'épaisseur L2. C'est pourquoi, à partir de la section D-D, au moins deux pièces de remplissage additionnelles 32 sont placées entre le renfort de longeron 26 et chaque peau 22 en regard, au niveau de l'intrados I et de l'extrados E de l'aube 7. De plus, la longueur L1 de la zone non déliée 27 augmente entre les sections C-C et D-D afin de retenir les pièces de remplissage 31 au centrifuge par restriction de section.

La section F-F se situe à une hauteur comprise entre 60 % et 85 % de la hauteur de la structure à profil aérodynamique 20.

Entre la section D-D et la section F-F (figures 4c, 4d et 4e), la structure générale de l'aube 7 ne change pas. Seules les dimensions géométriques évoluent. L'ensemble des dimensions (notamment la longueur L1, l'épaisseur L2 ou encore la corde) diminuent progressivement suivant la direction radiale de la section D-D en direction de la section F-F pour les raisons déjà évoquées.

Au-delà de la section F-F, à partir d'une limite inférieure égale à environ 85 % de la hauteur de la structure à profil aérodynamique 20 et jusqu'au sommet d'aube 7, l'aube 7 peut être dépourvue de renfort de longeron 26. La cavité délimitée par le renfort de longeron 26 (limite radiale inférieure), les peaux 22 et le sommet d'aube 7 peut alors être comblée par une pièce de remplissage supplémentaire 33, qui peut comprendre l'un des matériaux listés plus haut pour les pièces de remplissage 31. De préférence la pièce de remplissage supplémentaire 33 ne débouche pas complètement sur le sommet d'aube 7 (pas de contact complet avec les peaux 22 au niveau du somme d'aube 7) afin de ménager un petit espace comblé par la résine au moment de l'injection pour assurer l'étanchéité de la cavité.

Les aubes 7 dont les sections sont illustrées sur les figures 4a-4f et 5a-5d comprennent donc quatre types de configuration (une première dans la partie de pied d'aube 24 (entre les sections A-A et B-B), une deuxième dans la portion inférieure de la partie de pale 25 entre les sections C-C et D-D, comprenant les pièces de remplissage 31), une troisième dans une portion centrale de la partie de pale 25 (entre les sections D-D et F-F, comprenant en outre les pièces de remplissage additionnelles 32) et une quatrième en sommet d'aube 7 (au-delà de la section F-F comprenant la pièce de remplissage supplémentaire 33). Ceci n'est cependant pas limitatif, l'aube 7 pouvant ne comprendre que la première et la deuxième configuration sur toute sa hauteur, ou encore uniquement la première configuration, la deuxième configuration ou la troisième configuration.

Par exemple, il est possible de supprimer la pièce de remplissage supplémentaire 33 en sommet d'aube 7 et de faire monter le renfort de longeron 26 jusqu'en sommet d'aube 7 ou, en variante, d'arrêter les déliaisons à hauteur de la section F-F et de continuer avec un renfort fibreux dépourvu de déliaison entre la section F-F et le sommet d'aube 7.

Selon une autre variante encore, partie de pale 25pourrait ne comprendre qu'une unique configuration correspondant aux sections de type C-C, D-D ou G-G.

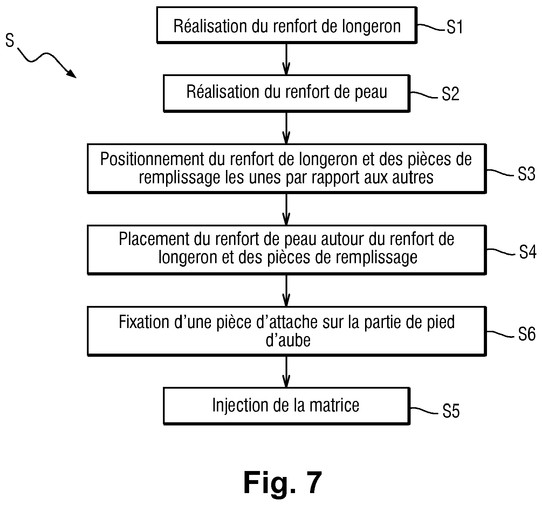

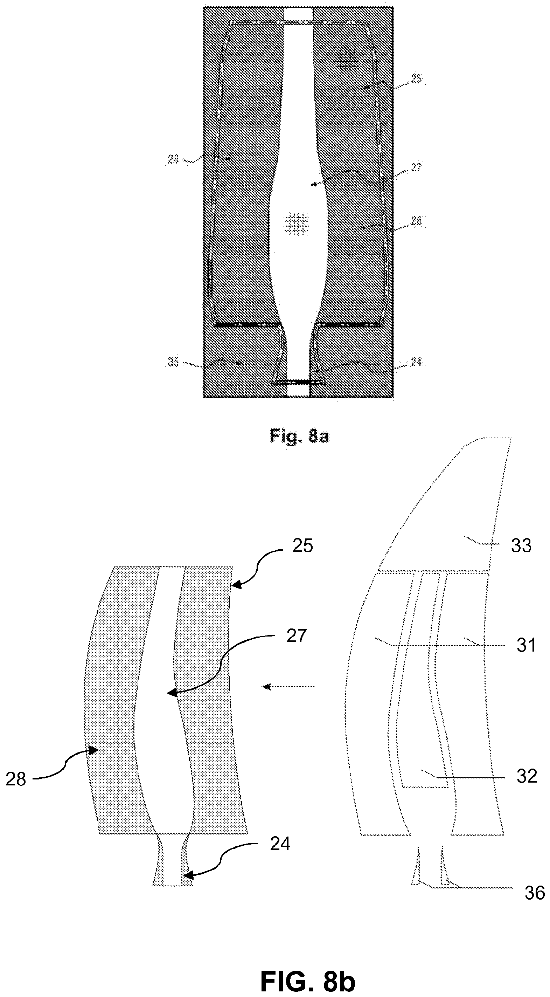

Les figures 7, 8a et 8b illustrent des étapes d'un procédé de fabrication S d'une aube 7 de soufflante conforme à un mode de réalisation possible de l'invention.

Selon une étape S1, le renfort de longeron 26 est réalisé par tissage tridimensionnel sur un métier à tisser de type jacquard. Lors du tissage, des faisceaux de torons de chaine (ou torons de chaine) sont disposés en plusieurs couches de plusieurs centaines de torons chacune. Des torons de trame T sont entrelacés avec les torons de chaine C de manière à lier les différentes couches de torons de chaines C entre elles.

Le renfort de longeron 26 est tissé à plat.

Dans l'exemple illustré, le tissage tridimensionnel est un tissage à armure « interlock ». Par « interlock », on désigne une armure de tissage dans laquelle chaque couche de torons de trame lie plusieurs couches de torons de chaine avec tous les torons d'une même colonne de trame ayant le même mouvement dans le plan de l'armure.

D'autres types de tissages tridimensionnels connus peuvent être utilisés, comme notamment ceux décrits dans le document WO 2006/136755.

L'étape de tissage du renfort de longeron 26 brut (ou préforme fibreuse) comprend successivement le tissage d'une portion de renfort fibreux provisoire 35 (qui sera chutée plus tard au cours du procédé de fabrication), le tissage de la partie de pied d'aube 24 et le tissage de la partie de pale 25. La portion de renfort fibreux provisoire 35 est tissée en entrelaçant tous les torons de chaine C nécessaires à la réalisation du renfort de longeron 26. Une fois que la colonne de trame a atteint une largeur prédéterminée, la partie de pale 25 est tissée. De cette manière, la partie de pied d'aube 24 comprend des fils de chaine qui se prolongent à l'intérieur de la partie de pale 25.

Afin de former les zones déliées 28, les torons de chaîne de deux couches successives ne sont pas reliés en deux endroits distincts et séparés par les torons de trame (qui formeront la zone non déliée 27), comme schématisé dans la Figure 6a. On obtient ainsi la zone non déliée 27, centrale, et les deux zones déliées 28 formant les quatre branches 29. Ces quatre branches 29 peuvent alors être écartées pour former des nervures dans la partie de pied d'aube 24 (figure 6b).

La réalisation de la partie de pied d'aube 24 utilise donc astucieusement les possibilités de déliaison d'une préforme fibreuse tissée et interloquée. Par conséquent, le procédé de fabrication demande peu d'opérations en comparaison avec l'utilisation d'un matériau composite stratifié, qui nécessite un drapage pli par pli. De plus, l'utilisation d'un matériau composite tissé interlock permet également d'éviter la présence d'interfaces faibles dans la partie structurale de la pale, écartant ainsi le risque d'endommagement par délaminage.

La portion de renfort fibreux provisoire 35 est ensuite découpée afin d'être éliminée (figure 8a). Le détourage et la découpe de la partie de pied d'aube 24 et de la partie de pale 25 peuvent être réalisés au jet d'eau sous pression.

Le renfort de longeron 26 est ensuite mis en forme (déformation en trois dimensions afin de lui conférer une forme vrillée correspondant à sa forme finale) (voir le renfort de longeron 26 à gauche sur la figure 8b).

Au cours d'une étape S2, qui peut être simultanée, successive ou antérieure à l'étape S1, le renfort de peau 23 est réalisé. Comme indiqué plus haut, le renfort de peau 23 peut comprendre un arrangement fibreux tissés, tressés, tricotés ou stratifies.

Au cours d'une étape S3, le renfort de longeron 26 et les pièces de remplissage 31 sont positionnées les unes par rapport aux autres (partie droite de la figure 8b). Le cas échéant, des pièces de remplissage temporaires 36, notamment en mousse, rendues non adhésives par traitement chimique (produit démoulant) et/ou ajout d'un téflon en surface, peuvent également être mises en place pour simplifier la forme du moule d'injection et/ou faciliter l'opération de démoulage. De telles pièces de remplissage temporaires 36 peuvent notamment être utilisées dans la partie de pied, au niveau de chaque zone déliée 28. Ces pièces de remplissage temporaires 36 sont retirées après injection.

Au cours d'une étape S4, le renfort de peau 23 est placé autour du renfort de longeron 26, des pièces de remplissage 31 et éventuellement des pièces de remplissage temporaires 36, de sorte que la partie de pied d'aube 24 se trouve à l'extérieur du renfort de peau 23 et que la partie de pale 25 se trouve à l'intérieur du renfort de peau 23.

Au cours d'une étape S5, l'ensemble ainsi obtenu, formé du renfort de longeron 26, du renfort de peau 23 et des pièces de remplissage 31, 32, 33 et/ou 34, est placé dans un moule présentant une cavité ayant la forme de la pièce finale moulée (à savoir l'aube 7) et de la matière plastique (la « matrice » de la structure à profil aérodynamique 20 et du longeron 21) est injectée dans le moule de manière à imprégner les deux renforts fibreux. L'injection de matière plastique peut être réalisée par une technique d'injection du type RTM ou VARRTM. La matière plastique injectée est par exemple une composition liquide thermodurcissable contenant un précurseur organique du matériau de la matrice. Le précurseur organique se présente habituellement sous forme d'un polymère, tel qu'une résine, éventuellement dilué dans un solvant.

De manière connue en soi, la matière plastique est chauffée de manière à provoquer une polymérisation de la matière plastique, par exemple par réticulation. A cet effet, le moule est placé dans une étuve. La pièce obtenue est ensuite démoulée puis, optionnellement, détourée par usinage afin de supprimer les sur-longueur et d'obtenir une pièce présentant la forme désirée, malgré une éventuelle rétractation des fibres des renforts pendant la polymérisation de la matière plastique.

Optionnellement, les pièces de remplissage temporaires 36 sont ensuite retirées.

Au cours d'une étape S6, une pièce d'attache 9 est rapportée et fixée sur le renfort de longeron 26. Elle peut notamment être obtenue par usinage afin de former la cavité dont la forme et les dimensions correspondent à celles de la partie de pied d'aube 24.

Optionnellement, la pièce d'attache 9 peut être réalisée en deux parties afin de pouvoir être rapportée et fixée autour de la partie de pied d'aube 24 grâce à deux bagues dédiées, par exemple par frettage, vissage, soudage ou encore à l'aide d'un collier de serrage. L'étape S6 de fixation de la pièce d'attache 9 peut donc être réalisée avant ou après l'injection (étape S5). Lorsque la pièce d'attache 9 est fixée avant injection sur la partie de pied d'aube 24, les pièces de remplissage temporaires 36 ne sont pas nécessaires en pied d'aube 7.

Des opérations conventionnelles de fin de gamme de l'aube 7 telles que des reprises par usinage, le collage de bandes anti-frottement, l'insertion d'un système de dégivrage ou encore l'ajout d'un bouclier métallique de bord d'attaque 18 peuvent ensuite être mises en œuvre.

## Revendications

1. Aube (7) comprenant une structure en matériau composite comprenant :
- une structure à profil aérodynamique (20) comprenant deux peaux (22) en vis-à-vis, les peaux (22) comprenant un premier renfort fibreux (23) densifié par une matrice ; et
- un longeron (21) comprenant un deuxième renfort fibreux (26) obtenu par tissage tridimensionnel et densifié par la matrice, ledit longeron (21) comprenant une partie de pied d'aube (24) s'étendant à l'extérieur de la structure à profil aérodynamique (20) et une partie de pale (25) disposée à l'intérieur de la structure à profil aérodynamique (20) entre les deux peaux (22) ;
au sein de la partie de pied d'aube (24), le deuxième renfort fibreux (26) comprend une zone non déliée (27);
l'aube (7) étant **caractérisée en ce que**, au sein de la partie de pied d'aube (24), le deuxième renfort fibreux (26) comprend également
au moins deux zones déliées (28) s'étendant radialement depuis la zone non déliée (27) de sorte à former au moins quatre branches (29) distinctes.

2. Aube (7) selon la revendication 1, dans laquelle, au sein de la partie de pied d'aube (24), les branches (29) de la zone déliée (28) sont globalement inscrites dans un cercle (C) centré sur un axe de calage (Y) de l'aube (7).

3. Aube (7) selon l'une des revendications 1 ou 2, comprenant en outre une pièce d'attache (9) comprenant une paroi délimitant une cavité configurée pour recevoir au moins partiellement la partie de pied d'aube (24), la pièce d'attache (9) pouvant être métallique et la paroi de la pièce d'attache (9) comprenant au moins quatre renfoncements configurés pour recevoir chacun, avec ajustement, une branche (29) du deuxième renfort fibreux (26).

4. Aube (7) selon la revendication 3, dans laquelle, dans une portion de la partie de pied d'aube (24) qui fait saillie de la pièce d'attache (9), un diamètre du cercle (C) diminue en direction de la partie de pale (25).

5. Aube (7) selon l'une des revendications 1 à 4, dans laquelle, au sein de la partie de pied d'aube (24), la zone non déliée (27) présente une première dimension (L1), suivant un axe sensiblement parallèle à une corde de l'aube (7), qui est constante sur une hauteur de la partie de pied d'aube (24) une deuxième dimension (L2), suivant un axe tangentiel qui est sensiblement perpendiculaire à une corde de l'aube (7), qui est constante sur une hauteur de la partie de pied d'aube (24).

6. Aube (7) selon l'une des revendications 1 à 5, dans laquelle la partie de pale (25) présente une portion inférieure adjacente à la partie de pied d'aube (24), la zone déliée (28) et la zone non déliée (27) du deuxième renfort fibreux (26) s'étendant jusque dans la portion inférieure, l'aube (7) comprenant en outre au moins deux pièces de remplissage (31) réalisées dans un matériau comportant des cavités internes, chaque pièce de remplissage (31) étant montée au sein d'une zone déliée (28) correspondante.

7. Aube (7) selon la revendication 6, dans laquelle la zone non déliée (27) présente une première dimension (L1), suivant un axe sensiblement parallèle à une corde de l'aube (7), qui est plus grande dans la portion inférieure de la partie de pale (25) que dans la partie de pied d'aube (24).

8. Aube (7) selon la revendication 7, dans laquelle la première dimension (L1) augmente progressivement au sein de la portion inférieure de la partie de pale (25) en direction d'un sommet de l'aube (7) et dans laquelle, au sein de la portion inférieure de la partie de pale (25), la zone non déliée (27) présente une deuxième dimension (L2), suivant un axe tangentiel qui est sensiblement perpendiculaire à une corde de l'aube (7), qui diminue en direction d'un sommet de l'aube (7).

9. Aube (7) selon l'une des revendication 6 à 8, dans laquelle la portion inférieure de la partie de pale comprend en outre au moins deux pièces de remplissage additionnelles (32) réalisées dans un matériau comportant des cavités internes, chaque pièce de remplissage additionnelle (32) étant montée entre la zone non déliée (27) et une peau (22) correspondante.

10. Aube (7) selon l'une des revendications 6 à 9, dans laquelle les zones non déliées (28) au sein de la partie de pale (25) s'étendent jusqu'à une partie des peaux (22) qui définit un bord d'attaque (18) et/ou un bord de fuite (19) de l'aube (7).

11. Aube (7) selon l'une des revendications 6 à 10, dans laquelle la partie de pale (25) présente en outre une portion supérieure comprenant le sommet d'aube (7), la portion supérieure de la partie de pale comprenant en outre au moins une pièce de remplissage supplémentaire (33) réalisée dans un matériau comportant des cavités internes, la portion supérieure de la partie de pale (25) étant dépourvue de deuxième renfort fibreux (26).

12. Aube (7) selon l'une des revendications 6 à 11, dans laquelle la partie de pale (25) présente en outre une portion supérieure comprenant le sommet d'aube (7), la portion supérieure de la partie de pale (25) comprenant uniquement le deuxième renfort fibreux (26).

13. Procédé de fabrication d'une aube (7) selon l'une des revendications 1 à 12 comprenant les étapes suivantes :
S1 : tissage tridimensionnel du deuxième renfort fibreux (26) du longeron (21) comprenant la zone non déliée (27) et au moins deux zones déliées (28) s'étendant radialement depuis la zone non déliée (27) de sorte à former au moins quatre branches (29) distinctes ;
S2 : réalisation du premier renfort fibreux (23) de la structure à profil aérodynamique (20), par exemple par tissage tridimensionnel, de façon à former les deux peaux (22) du profil aérodynamique (20) ;
S4 : insertion du deuxième renfort fibreux (26) entre les deux peaux du premier renfort fibreux (23) de sorte que la partie de pied d'aube (24) se trouve à l'extérieur du premier renfort fibreux (23) et que la partie de pale (25) se trouve à l'intérieur du premier renfort fibreux (23) entre les deux peaux ; et
S5 : placement de l'ensemble formé par le premier renfort fibreux (23) et le deuxième renfort fibreux 26) dans un moule et injection d'une matrice dans l'ensemble de sorte à obtenir l'aube (7).

14. Procédé selon la revendication 13, comprenant en outre, préalablement à l'étape S4, une étape de positionnement (S3) d'au moins une pièce de remplissage (31, 32, 33) réalisée dans un matériau comportant des cavités internes par rapport au premier renfort fibreux (23).

15. Soufflante (3) comprenant un disque de soufflante et des aubes conformes à l'une des revendications 1 à 12.

## Patentansprüche

1. Schaufel (7), umfassend eine Struktur aus Verbundwerkstoff, umfassend:
- eine Struktur mit aerodynamischem Profil (20), die zwei einander gegenüberliegende Deckschichten (22) umfasst, wobei die Deckschichten (22) eine erste Faserverstärkung (23) aufweisen, die durch eine Matrix verdichtet ist; und
- einen Längsträger (21), der eine zweite Faserverstärkung (26) umfasst, die durch dreidimensionales Weben erhalten wird und durch die Matrix verdichtet ist, wobei der Längsträger (21) einen Schaufelfußteil (24), der sich außerhalb der Struktur mit aerodynamischem Profil (20) erstreckt, und einen Blattteil (25) umfasst, der innerhalb der Struktur mit aerodynamischem Profil (20) zwischen den beiden Deckschichten (22) angeordnet ist;
die zweite Faserverstärkung (26) innerhalb des Schaufelfußteils (24) einen nicht gelösten Bereich (27) umfasst;
wobei die Schaufel (7) **dadurch gekennzeichnet ist, dass** innerhalb des Schaufelfußteils (24) die zweite Faserverstärkung (26) ebenfalls mindestens zwei gelöste Bereiche (28) umfasst, die sich radial ab dem nicht gelösten Bereich (27) erstrecken, so dass mindestens vier verschiedene Schenkel (29) gebildet werden.

2. Schaufel (7) nach Anspruch 1, wobei innerhalb des Schaufelfußteils (24) die Schenkel (29) des gelösten Bereichs (28) im Wesentlichen in einem Kreis (C) eingeschrieben sind, der auf einer Einstellachse (Y) der Schaufel (7) zentriert ist.

3. Schaufel (7) nach einem der Ansprüche 1 oder 2, die ferner ein Befestigungsteil (9) umfasst, das eine Wand umfasst, die einen Hohlraum begrenzt, der ausgelegt ist, um mindestens teilweise den Schaufelfußteil (24) aufzunehmen, wobei das Befestigungsteil (9) aus Metall sein kann und die Wand des Befestigungsteils (9) mindestens vier Vertiefungen umfasst, die ausgelegt sind, um jeweils mit Passung einen Schenkel (29) der zweiten Faserverstärkung (26) aufzunehmen.

4. Schaufel (7) nach Anspruch 3, wobei in einem aus dem Befestigungsteil (9) herausragenden Abschnitt des Schaufelfußteils (24) ein Durchmesser des Kreises (C) in Richtung des Blattteils (25) abnimmt.

5. Schaufel (7) nach einem der Ansprüche 1 bis 4, wobei innerhalb des Schaufelfußteils (24) der nicht gelöste Bereich (27) eine erste Abmessung (L1) gemäß einer Achse aufweist, die im Wesentlichen parallel zu einer Sehne der Schaufel (7) ist, die über eine Höhe des Schaufelfußteils (24) konstant ist, eine zweite Abmessung (L2) gemäß einer tangentialen Achse, die im Wesentlichen senkrecht zu einer Sehne der Schaufel (7) ist, die über eine Höhe des Schaufelfußteils (24) konstant ist.

6. Schaufel (7) nach einem der Ansprüche 1 bis 5, wobei der Blattteil (25) einen unteren Abschnitt aufweist, der an den Schaufelfußabschnitt (24) angrenzt, wobei sich der gelöste Bereich (28) und der nicht gelöste Bereich (27) der zweiten Faserverstärkung (26) bis in den unteren Abschnitt erstrecken, wobei die Schaufel (7) ferner mindestens zwei Füllstücke (31) umfasst, die aus einem Material mit inneren Hohlräumen hergestellt sind, wobei jedes Füllstück (31) in einem entsprechenden gelösten Bereich (28) angebracht ist.

7. Schaufel (7) nach Anspruch 6, wobei der nicht gelöste Bereich (27) eine erste Abmessung (L1) gemäß einer Achse aufweist, die im Wesentlichen parallel zu einer Sehne der Schaufel (7) ist, die im unteren Abschnitt des Blattteils (25) größer ist als im Schaufelfußteil (24).

8. Schaufel (7) nach Anspruch 7, wobei die erste Abmessung (L1) innerhalb des unteren Abschnitts des Blattteils (25) in Richtung eines Scheitels der Schaufel (7) allmählich zunimmt und wobei innerhalb des unteren Abschnitts des Blattteils (25) der nicht gelöste Bereich (27) eine zweite Abmessung (L2) gemäß einer tangentialen Achse aufweist, die im Wesentlichen senkrecht zu einer Sehne der Schaufel (7) ist, die in Richtung eines Scheitels der Schaufel (7) abnimmt.

9. Schaufel (7) nach einem der Ansprüche 6 bis 8, wobei der untere Abschnitt des Blattteils ferner mindestens zwei zusätzliche Füllstücke (32) umfasst, die aus einem Material mit inneren Hohlräumen bestehen, wobei jedes zusätzliche Füllstück (32) zwischen dem nicht gelösten Bereich (27) und einer entsprechenden Deckschicht (22) angebracht ist.

10. Schaufel (7) nach einem der Ansprüche 6 bis 9, wobei sich die nicht gelösten Bereiche (28) innerhalb des Blattteils (25) bis zu einem Teil der Deckschichten (22) erstrecken, der eine Vorderkante (18) und/oder eine Hinterkante (19) der Schaufel (7) definiert.

11. Schaufel (7) nach einem der Ansprüche 6 bis 10, wobei der Blattteil (25) ferner einen oberen Abschnitt aufweist, der den Scheitel der Schaufel (7) umfasst, wobei der obere Abschnitt des Blattteils ferner mindestens ein zusätzliches Füllstück (33) umfasst, das aus einem Material mit inneren Hohlräumen besteht, wobei der obere Abschnitt des Blattteils (25) keine zweite Faserverstärkung (26) aufweist.

12. Schaufel (7) nach einem der Ansprüche 6 bis 11, wobei der Blattteil (25) ferner einen oberen Abschnitt aufweist, der den Scheitel der Schaufel (7) umfasst, wobei der obere Abschnitt des Blattteils (25) nur die zweite Faserverstärkung (26) umfasst.

13. Verfahren zur Herstellung einer Schaufel (7) nach einem der Ansprüche 1 bis 12, das die folgenden Schritte umfasst:
S1: dreidimensionales Weben der zweiten Faserverstärkung (26) des Längsträgers (21), die den nicht gelösten Bereich (27) und mindestens zwei gelöste Bereiche (28) umfasst, die sich radial ab dem nicht gelösten Bereich (27) erstrecken, so dass mindestens vier verschiedene Schenkel (29) gebildet werden;
S2: Herstellen der ersten Faserverstärkung (23) der Struktur mit aerodynamischem Profil (20), beispielsweise durch dreidimensionales Weben, so dass die beiden Deckschichten (22) des aerodynamischen Profils (20) gebildet werden;
S4: Einsetzen der zweiten Faserverstärkung (26) zwischen die beiden Deckschichten der ersten Faserverstärkung (23), so dass sich der Schaufelfußteil (24) außerhalb der ersten Faserverstärkung (23) befindet und sich der Blattteil (25) innerhalb der ersten Faserverstärkung (23) zwischen den beiden Deckschichten befindet; und
S5: Platzieren der aus der ersten Faserverstärkung (23) und der zweiten Faserverstärkung (26) gebildeten Anordnung in einer Form und Einspritzen einer Matrix in die Anordnung, um die Schaufel (7) zu erhalten.

14. Verfahren nach Anspruch 13, das ferner vor dem Schritt S4 einen Schritt (S3) des Positionieres mindestens eines Füllstücks (31, 32, 33), das aus einem Material mit inneren Hohlräumen hergestellt ist, in Bezug auf die erste Faserverstärkung (23) umfasst.

15. Gebläse (3), das eine Gebläsescheibe und Schaufeln nach einem der Ansprüche 1 bis 12 umfasst.

## Claims

1. Blade (7) comprising a composite material structure comprising :
- an aerodynamic profile structure (20) comprising two skins (22) facing each other, the skins (22) comprising a first fibrous reinforcement (23) densified by a matrix; and
- a spar (21) comprising a second fibrous reinforcement (26) obtained by three-dimensional weaving and densified by the matrix, said spar (21) comprising a blade root part (24) extending outside the airfoil structure (20) and a airfoil part (25) disposed inside the airfoil structure (20) between the two skins (22);
within the blade root part (24), the second fibrous reinforcement (26) comprises a non-interlinked area (27);
the blade (7) being **characterised in that**, within the blade root part (24), the second fibrous reinforcement (26) also comprises at least two non- interlinked areas (28) extending radially from the interlinked area (27) so as to form at least four distinct branches (29).

2. Blade (7) according to claim 1, wherein, within the blade root part (24), the branches (29) of the non-interlinked area (28) are generally contained in a circle (C) centred on a setting axis (Y) of the blade (7).

3. Blade (7) according to one of claims 1 or 2, further comprising an fastening piece (9) comprising a wall delimiting a cavity configured to at least partially receive the blade root part (24), it being possible for the fastening piece (9) to be metallic and the wall of the fastening piece (9) comprising at least four depressions each configured to receive, with adjustment, a branch (29) of the second fibrous reinforcement (26).

4. Blade (7) according to claim 3, wherein, in a portion of the blade root part (24) which protrudes from the fastening piece (9), a diameter of the circle (C) decreases towards the airfoil part (25).

5. The blade (7) as claimed in one of claims 1 to 4, wherein, within the blade root part (24), the interlinked area (27) has a first dimension (L1), along an axis substantially parallel to a chord of the blade (7), which is constant over a height of the blade root part (24), and a second dimension (L2), along a tangential axis which is substantially perpendicular to a chord of the blade (7), which is constant over a height of the blade root part (24).

6. The blade (7) as claimed in one of claims 1 to 5, wherein the airfoil part (25) has a lower portion adjacent to the blade root part (24), the non-interlinked area (28) and the interlinked area (27) of the second fiber reinforcement (26) extending all the way into the lower portion, the blade (7) further comprising at least two filling pieces (31) made of a material including inner cavities, each filling piece (31) being mounted within a corresponding non-interlinked area (28).

7. The blade (7) as claimed in claim 6, wherein the interlinked area (27) has a first dimension (L1), along an axis substantially parallel to a chord of the blade (7), which is greater in the lower portion of the airfoil part (25) than in the blade root part (24).

8. The blade (7) as claimed in claim 7, wherein the first dimension (L1) gradually increases within the lower portion of the airfoil part (25) towards a tip of the blade (7) and wherein, within the lower portion of the airfoil part (25), the interlinked area (27) has a second dimension (L2), along a tangential axis which is substantially perpendicular to a chord of the blade (7), which decreases towards a tip of the blade (7).

9. The blade (7) as claimed in one of claims 6 to 8, wherein the lower portion of the airfoil part further comprises at least two additional filling pieces (32) made of a material including inner cavities, each additional filling piece (32) being mounted between the interlinked area (27) and a corresponding skin (22).

10. The blade (7) as claimed in one of claims 6 to 9, wherein the interlinked areas (28) within the airfoil part (25) extend all the way to a part of the skins (22) which defines a leading edge (18) and/or a trailing edge (19) of the blade (7).

11. The blade (7) as claimed in one of claims 6 to 10, wherein the airfoil part (25) further includes an upper portion comprising the blade tip (7), the upper portion of the airfoil part further comprising at least one additional filling piece (33) made of a material including inner cavities, the upper portion of the airfoil part (25) being devoid of any second fiber reinforcement (26).

12. The blade (7) as claimed in one of claims 6 to 11, wherein the airfoil part (25) further includes an upper portion comprising the blade tip (7), the upper portion of the airfoil part (25) solely comprising the second fiber reinforcement (26).

13. A method for manufacturing a blade (7) as claimed in one of claims 1 to 12 comprising the following steps:
S1 : three-dimensional weaving of the second fiber reinforcement (26) of the spar (21) comprising the interlinked area (27) and at least two non-interlinked areas (28) extending radially from the interlinked area (27) so as to form at least four distinct branches (29);
S2 : producing the first fiber reinforcement (23) of the aerodynamic profile structure (20), for example by three-dimensional weaving so as to form the two skins (22) of the aerodynamic profile structure (20);
S4 : inserting the second fiber reinforcement (26) into the two skins of the first fiber reinforcement (23) such that the blade root part (24) is located on the outside of the first fiber reinforcement (23) and the airfoil part (25) is located inside the first fiber reinforcement (23); between the two skins and
S5 : placing the assembly formed by the first fiber reinforcement (23) and the second fiber reinforcement (26) into a mold and injecting a matrix into the assembly such as to obtain the blade (7).

14. The method as claimed in claim 13, further comprising, prior to the step S4, a step (S3) of positioning at least one filling piece (31, 32, 33) made of a material including inner cavities with respect to the first fiber reinforcement (23).

15. A fan (3) comprising a fan disc and blades as claimed in one of claims 1 to 12.
